# EUROPEAN PATENT APPLICATION

(11) **EP 1 724 086 A1**
(43) Date of publication of application: **22.11.2006**
(21) Application number: 05104235.6
(22) Date of filing: 19.05.2005
(51) Int. Cl.: B29C 44/58

(54) **Machine for moulding plastic blocks**

(71) Applicant: HIRSCH ITALIA S.r.l., 22031 ALBAVILLA (CO) (IT)
(72) Inventor: Dubini, Marco, 22031, Albavilla (CO) (IT); Rabaioli, Gianmario, 22031, Albavilla (CO) (IT)
(74) Representative: Giambrocono, Alfonso

(57) **Abstract**

The machine (1) for moulding plastic blocks comprises a hollow body (2) defining a moulding chamber (3) connected to dispensers (7) for feeding plastic beads to be processed and to steam feed conduits (8). The machine (1) presents a first movable wall (10) presenting at least two portions (11,12) defining an extendable structure (12), such that said first wall can move within said moulding chamber (3) to vary its shapes and/or dimensions while maintaining its edges associated with the internal walls of the body (2), and to a second movable wall by extending or contracting the extendable structure (12).

## Description

The present invention relates to a machine for moulding plastic blocks; hereinafter specific reference is made to machines for moulding plastic such as polystyrene.

Polystyrene blocks are currently produced by inserting into a suitable moulding chamber a fixed quantity of plastic in the form of beads and then feeding steam.

The steam causes the plastic pearls to expand and mutually adhere with the consequent production of a monolithic block.

However these machines are clearly able to produce blocks presenting fixed dimensions independently of the final dimensions required by the user; this means that in practice a plastic block is produced having the dimensions which the machine is able to produce, then if the dimensions required by the user are smaller, part of the material has to be removed to produce the plastic block of the required dimensions.

This procedure is extremely disadvantageous as it requires numerous machining operations, which negatively influence both productivity and the costs associated with the finished product.

A further drawback is the considerable quantity of scrap which is produced and has to be eliminated; this evidently implies considerable environmental impact and high costs.

To obviate these drawbacks machines have been developed provided with a movable monolithic wall which, when moved within the moulding chamber, enables different volumes to be defined and hence enables blocks to be produced having one dimension adjustable according to the particular requirements of the final user; hence the final operations following moulding are reduced in this case as the block presents dimensions close to those required by the final operator.

In practice, traditional machines of this type present a parallelepiped body within which a square monolithic wall is slidably inserted; this wall can be moved within the interior of the body while maintaining its edges in sliding contact with the inner surfaces of the body.

Although these machines limit the aforestated drawbacks, they still present numerous problems related both to the number and cost of the machining operations to be effected after moulding, and to the considerable quantity of scrap which is produced (and has subsequently to be eliminated).

In this respect, traditional machines of this type provide only a very limited freedom in producing plastic blocks and, in particular, enable blocks to be produced having only one dimension which can be varied and adjusted, without however the possibility of varying the geometric shape or more than one dimension of the produced plastic block.

The technical aim of the present invention therefore to provide a machine for moulding plastic blocks with which the stated technical drawbacks of the known art are eliminated.

Within the scope of this technical aim an object of the invention is to provide a machine which enables blocks of plastic material such as polystyrene to be moulded having the required dimensions, without the need for numerous complex or costly machining operations after moulding to adapt the block dimensions to those effectively required by the user.

A further object of the present invention is to provide a machine which limits the quantity of machining scrap produced during the plastic block production cycle.

A further object of the invention is to provide a machine which is substantially economical and enables plastic blocks to be produced substantially economically.

The technical aim together with these and further objects are attained according to the invention by a machine for moulding plastic blocks in accordance with claim 1.

Other characteristics of the present invention are defined in the subsequent claims.

Further characteristics and advantages of the invention will be more apparent from the description of a preferred but non-exclusive embodiment of the machine according to the invention, illustrated by way of non-limiting example in the accompanying drawings, in which:
Figure 1 is a schematic view of a machine according to the present invention;
Figure 2 is a perspective view of a portion of the machine of the invention;
Figure 3 is a perspective view of a first portion of a wall which is movable within the body, and with which a second portion is associated slidable relative to the first; and
Figure 4 is a view of the machine of the invention taken from above.

Said figures show a machine for moulding plastic blocks, indicated overall by the reference numeral 1; hereinafter reference will be made specifically to vertical moulding machines.

The machine 1 comprises a hollow body 2 defining a moulding chamber 3 connected to means 4 for feeding plastic beads to be processed, and to steam feed conduits 5.

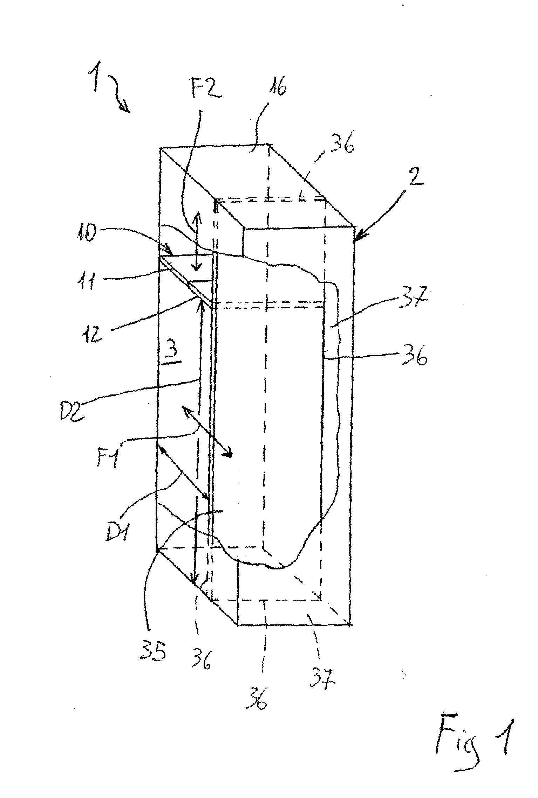

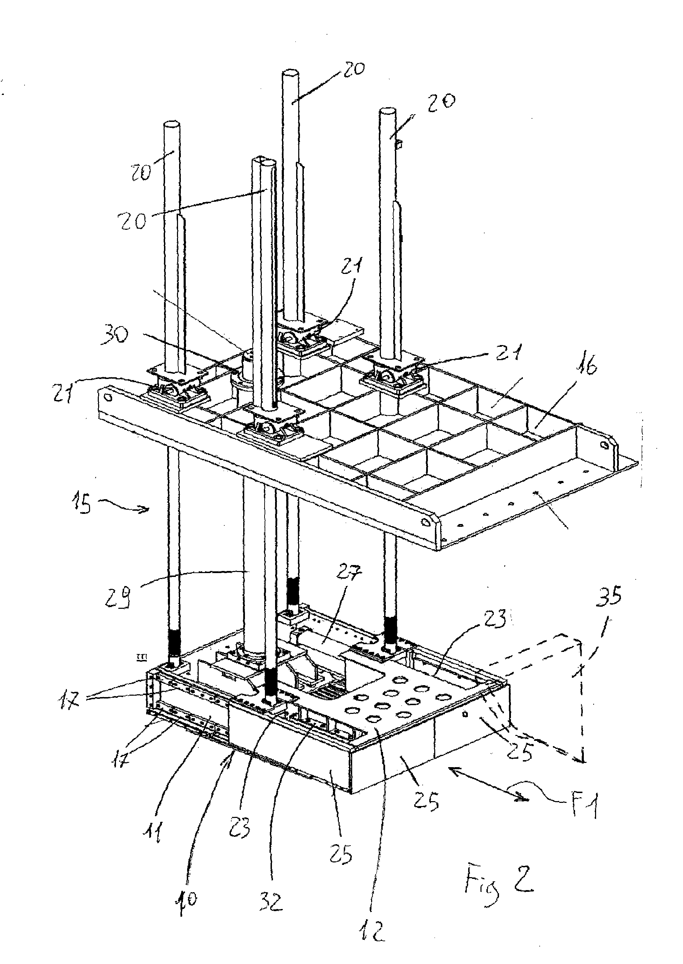

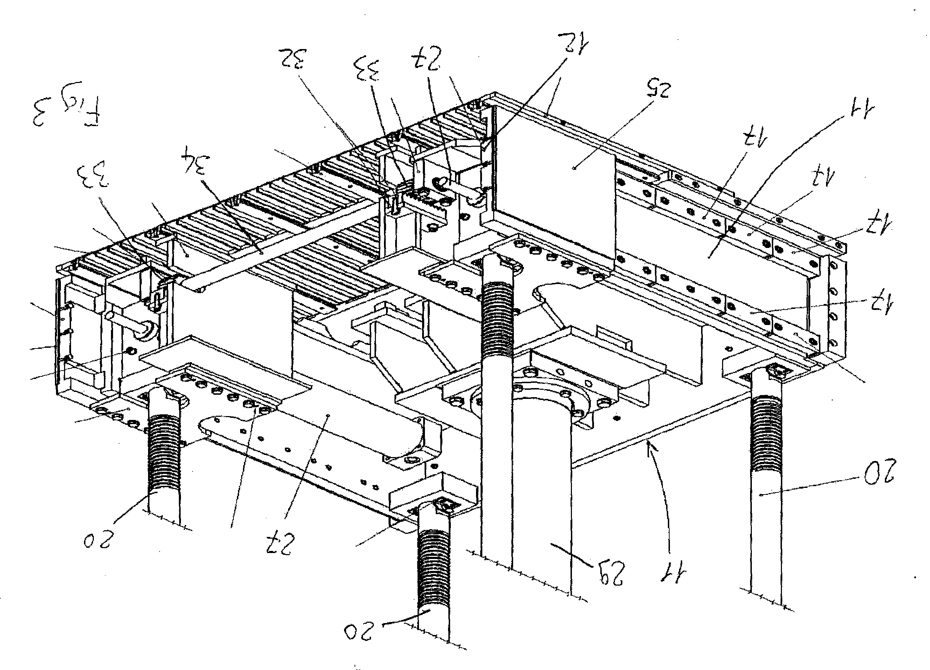

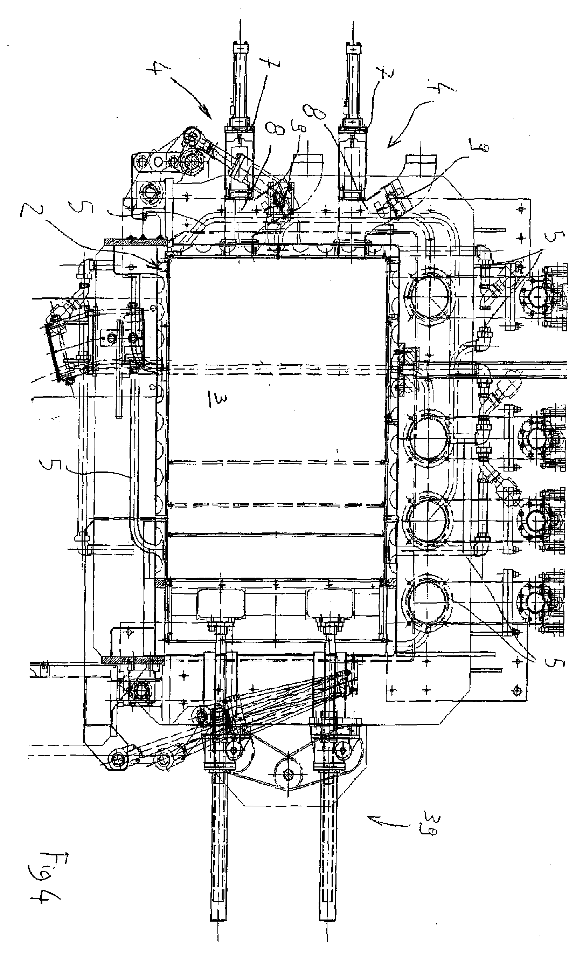

As shown in Figure 4, the bead feed means 4 comprise volumetric dispensers 7 able to feed predetermined quantities of plastic beads into channels 8 connectable to fans (not shown).

The channels 8 are provided with valving means 9 able to open or close passage through the conduits 8.

As shown in Figure 4, the feed conduits 5 have their ends connected to the body 2 at all its walls and also at various positions on each wall so that when fed, the steam enters the moulding chamber 3 uniformly and homogeneously, so that the plastic beads undergo ideal reaction wherever they are disposed within the moulding chamber.

Preferably, the conduits 5 or groups of conduits 5 are provided with valving means (such as solenoid valves) which are individually operable to allow or prevent steam passage through them; in this manner steam can be fed only through those conduits 5 which open into the moulding chamber 3 and not through those which because of the particular adjustments effected no longer open into the moulding chamber.

The machine 1 presents a first movable wall 10 presenting at least two portions 11, 12 defining an extendable structure, such that the first wall 10 can move within the moulding chamber 3 to vary its shape and/or dimensions while maintaining its edges associated with the inner walls of the body; in this manner plastic blocks can be produced presenting different shapes and/or dimensions.

Preferably the two portions 11, 12 are slidably connected one to the other.

A first portion 11 of the first wall 10 is connected to means 15 for its support and positioning relative to a wall 16 of the body 2, and also carries a plurality of slide blocks 17 supporting the second portion 12.

In the embodiment shown in the figures, the wall 16 is the upper wall of the body 2, the movable wall 10 being connected to the upper wall 16 by the means 15; in other embodiments the movable wall 10 can be connected to other walls different from the upper wall.

The support and positioning means 15 comprise a plurality of uprights 20 fixed at one end to the first portion 11 and operationally associated at an opposite end with operating cylinder-piston units 21.

The second portion 12 is box shaped and by sliding, becomes inserted above the first portion 11.

A surface of the second portion 12 which does not face the moulding chamber 3 is provided with apertures 23 through which the uprights 20 connected to the first portion 11 pass.

In this manner the second portion 12 can be slid relative to the first portion 11 without risk of interference between the second portion 12 and the uprights connected to the first portion 11.

Preferably the second portion 12 has its lateral surfaces provided with gaskets 25 to seal the moulding chamber 3; these gaskets 25 are advantageously in the form of Teflon plates.

The first portion 11 of the movable wall 10 carries (in the illustrated embodiment) two actuators 27 for moving and positioning the second portion 12 relative to the first portion 11.

These actuators are of hydraulic or pneumatic type and are operated by hydraulic or pneumatic conduits contained within a central channel 29 fixed to the first element 11 of the movable wall 10 and slidably connected to a flange 30 of the wall 16.

The second portion 12 also presents a pair of rack-type tracks 32 which engage on corresponding toothed wheels 33 pivoted on the first portion 11.

Preferably the toothed wheels 33 are disposed in correspondence with that end of the first portion 11 to which the second portion 12 is slidably connected, in this manner the tracks 32, resting on the toothed wheels 33, form a support for the second portion 12 positioned at the end of the first portion 11.

Advantageously, to prevent misalignment or incorrect movement of the second portion 12 relative to the first portion 11, the two toothed wheels 33 are connected together by a shaft 34.

Further advantageously, the machine 1 also comprises a second movable wall 35 within the body 2; this can also be moved to vary the shape and/or dimensions of the moulding chamber.

As shown in Figure 1, the second movable wall 35 can translate with all its edges 36 slidably associated with internal surfaces 37 of the body 2, the first wall 10 being able to translate with at least the second portion 12 slidably associated with the second wall 35.

The second wall is driven by actuators 39 of known type.

The operation of the plastic block moulding machine of the invention is apparent form that described and illustrated, and is substantially as follows.

When a plastic block of predetermined dimensions is to be produced, the second wall 35 is translated as indicated by the arrow F1, until it defines (together with the other walls of the body 2) the dimension D1 required for the plastic block to be produced.

As can be seen from Figure 2, translation in the direction of the arrow F1 also causes the second portion 12 of the first wall 10 to translate.

In a first embodiment the actuators 27 are connected to a central control processor which, when causing the second wall 35 to advance, simultaneously causes the second portion 12 of the first wall 10 to withdraw and vice versa.

Hence in practice the processor causes the first wall 10 to extend and retract in relation to the drive commands fed to the second wall 35.

Alternatively the actuators 27 may be simply an elastic means which presses the second portion 12 against the second wall 35 such as to maintain it always adhering to the second wall 35 when this moves it.

Hence, because of the sliding of the second portion 12 on the first portion 11, the first wall 10 increases or decreases its dimensions to adapt to the particular position assumed by the second wall 35 and maintain the gaskets 25 always in contact with the second wall 35.

The first wall 10 is then also translated as indicated by the arrow F2 until it defines the moulding chamber 3 presenting the required dimension D2.

The plastic beads are then fed into the moulding chamber 3 and the steam is fed to enable the reaction to take place and produce the plastic blocks.

The adjustments can also be made by firstly translating the first wall 10 and then the second wall 35; all adjustments are made in similar manner except the obvious modifications due to the fact that the first wall 10 is moved before the second wall 35.

Modifications and variants are possible in addition to those already described, for example the moulding chamber can present a base which is not square or rectangular, but with opposite walls converging, the movable wall being used to modify the dimensions of the movable wall interposed between the opposite converging walls.

In this case the dimensions of the extendable movable wall adapt to the variable dimensions of the compartment which it has to close during its movement.

It has been found in practice that the plastic block moulding machine of the invention is particularly advantageous because it enables substantial economical savings to be achieved and enables the environmental impact of machining operations to be reduced.

Moreover the machine of the invention is of very flexible operation, as it is able to produce plastic blocks having very different dimensions and shapes.

The plastic block moulding machine conceived in this manner is susceptible to numerous modifications and variants, all falling within the scope of the inventive concept; moreover all details can be replaced by technically equivalent elements.
In practice, the materials used, and the dimensions, can be chosen at will in accordance with requirements and the state of the art.

## Claims

1. A machine (1) for moulding plastic blocks comprising a hollow body (2) defining a moulding chamber (3) connected to means (4) for feeding plastic beads to be processed and to steam feed conduits (8), **characterised by** presenting at least one first movable wall (10) presenting at least two portions (11, 12) defining an extendable structure, such that said first wall (10) can move within said moulding chamber (3) to vary its shapes and/or dimensions while maintaining its edges associated with the internal walls of the body (2).

2. A machine (1) as claimed in claim 1, **characterised in that** said two portions (11, 12) are slidably connected together.

3. A machine (1) as claimed in one or more of the preceding claims, **characterised in that** a first portion (11) of said first wall (10) is connected to means (15) for its support and positioning relative to a wall (16) of said body (2), and carries a plurality of slide blocks (17) supporting a second portion (12).

4. A machine (1) as claimed in one or more of the preceding claims, **characterised in that** said support and positioning means (15) comprise a plurality of uprights (20) fixed at one end to said first portion (11) and operationally associated at an opposite end with operating cylinder-piston units (21).

5. A machine (1) as claimed in one or more of the preceding claims, **characterised in that** said second portion (12) is box shaped and by sliding, becomes inserted above the first portion (11).

6. A machine (1) as claimed in one or more of the preceding claims, **characterised in that** a surface of said second portion (12) which does not face the moulding chamber (3) is provided with apertures (23) through which said uprights connected to said first portion (11) pass.

7. A machine (1) as claimed in one or more of the preceding claims, **characterised in that** said second portion (12) has its lateral surfaces provided with gaskets (25) to seal the moulding chamber (3).

8. A machine (1) as claimed in one or more of the preceding claims, **characterised in that** said first portion (11) of said movable wall (10) carries at least one actuator (27) for moving and positioning said second portion (12) relative to said first portion (11).

9. A machine (1) as claimed in one or more of the preceding claims, **characterised in that** said second portion (12) presents a pair of rack-type tracks (32) which engage on corresponding toothed wheels (33) pivoted on said first portion (11).

10. A machine (1) as claimed in one or more of the preceding claims, **characterised in that** said toothed wheels (33) are disposed in correspondence with that end of said first portion (11) to which the second portion (12) is slidably connected.

11. A machine (1) as claimed in one or more of the preceding claims, **characterised in that** said toothed wheels (33) are connected together by a shaft (34).

12. A machine (1) as claimed in one or more of the preceding claims, **characterised by** comprising within said body (2) a second movable wall (35) able to be moved to vary the shape and/or dimensions of the moulding chamber (3).

13. A machine (1) as claimed in one or more of the preceding claims, **characterised in that** the second movable wall (35) is arranged to translate with all its edges slidably associated with internal surfaces of said body (2), said first wall (11) being arranged to translate with at least the second portion (12) slidably associated with the second wall (35).

14. A machine (1) as claimed in one or more of the preceding claims, **characterised in that** said actuators (27) are connected to a central control processor which, when causing the second wall (35) to advance, simultaneously causes the second portion (12) of the first wall (10) to withdraw and vice versa.

15. A machine (1) as claimed in one or more of the preceding claims, **characterised in that** the actuators (27) constitute an elastic means which presses the second portion (12) against the second wall (35) such as to maintain it always adhering to the second wall (35) when this moves it.
